(19) **Europäisches Patentamt / European Patent Office / Office européen des brevets**

(11) **EP 2 037 520 A1**

(12) **EUROPEAN PATENT APPLICATION**
published in accordance with Art. 153(4) EPC

(43) Date of publication:
**18.03.2009 Bulletin 2009/12**

(21) Application number: **07767163.4**

(22) Date of filing: **19.06.2007**

(51) Int Cl.:
*H01M 8/02* (2006.01)   *H01M 8/10* (2006.01)
*H01M 8/24* (2006.01)

(86) International application number:
**PCT/JP2007/062289**

(87) International publication number:
**WO 2007/148679 (27.12.2007 Gazette 2007/52)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.06.2006  JP 2006172723**

(71) Applicant: **Toyota Jidosha Kabushiki Kaisha Toyota-shi, Aichi 471-8571 (JP)**

(72) Inventors:
• **ISHIMARU, Hirokazu**
  **Toyota-shi**
  **Aichi 471-8571 (JP)**
• **HAMA, Yuichiro**
  **Toyota-shi**
  **Aichi 471-8571 (JP)**

(74) Representative: **Kuhnen & Wacker**
  **Intellectual Property Law Firm**
  **Prinz-Ludwig-Strasse 40A**
  **85354 Freising (DE)**

(54) **TUBE TYPE FUEL CELL**

(57)    To provide a tube-type fuel cell, which has an electricity-collecting structure that makes it possible to collect electricity in axially-orthogonal directions in an outside electricity collector of single cell constituting the tube-type fuel cell, and whose electricity-collecting distance is so less as to make it possible to be of low resistance.

A tube-type fuel cell according to the present invention is such that, in a tube-type fuel cell comprising: a tube-shaped single cell 1 being completed by putting an inside electricity collector 11, a first catalytic electrode layer 12, an electrolytic membrane 13, a second catalytic electrode layer 14 and an outside electricity collector 15 in a lamination in this order from an axially-orthogonal inner side; and a battery case 2 for bundling a plurality of the single cells 1 together and then accommodating the single cells therein; a plurality of the single cells 1 being accommodated together within the battery case 2 while contacting with each other electrically by way of at least a part of outer peripheral surfaces 151 of the outside electricity collectors 15 of the single cells 1, thereby collecting electricity in axially-orthogonal directions thereof.

Fig. 2

**Description**

TECHNICAL FIELD

The present invention relates to tube-type fuel cells, especially to a tube-type fuel cell that has an electricity collecting structure in the axially-orthogonal directions of tube-shaped single cells.

BACKGROUND ART

Recently, the consumption of energy has enlarged sharply along with the economic development of the world, and the deteriorations of environments have been concerned. Under such circumstances, as one of curingmeasures to the environmental problems and energy problems, the development of fuel cell has been attracting attention, fuel cell which uses an oxidizing-agent gas, such as oxygen and air, and a reducing-agent gas (fuel gas), such as hydrogen and methane, or a liquid fuel, such as methanol, as raw materials, and fuel cell which generates electricity by converting chemical energy into electric energy by means of electrochemical reaction. In particular, fuel cells whose output density is large and in addition to that whose conversion efficiency is high have come to the fore.

Single cells (unit cells) of conventional flat-plate-structured solid polymer electrolyte-type fuel cell (hereinafter, simply referred to as "fuel cell"), the minimum power-generation units, have a membrane electrode assembly (MEA: membrane electrode assembly) in which catalytic electrode layers are bonded on the opposite sides of a solid electrolytic membrane in general, and gas diffusion layers are put on the opposite sides of this membrane electrode assembly. Further, separators being equipped with gas flow passages are put on the outside of these two gas diffusion layers. Accordingly, the reactant gases (fuel gas and oxidizing-agent gas), which have flowed in the separators by way of the gas diffusion layers, are distributed to the catalytic electrode layers of the membrane electrode assembly, and additionally an electric current, which has been obtained by means electricity-generation reaction, is conducted to the outside.

However, in such a conventional flat-plate-structured fuel cell, the design factors, such as the thickness and durability of the solid electrolytic membrane, catalytic electrode layers, gas diffusion layers and separators that constitute the single cells, are limited to prior art. For example, in order to make an electricity-generation reaction surface area per unit volume greater, a thin solid electrolytic membrane has been demanded. Currently, the "Nafion" membrane (Nafion) has been used versatilely. However, in the "Nafion" membrane, the gas permeability becomes too great when the membrane thickness becomes a predetermined thickness or less. Accordingly, the fuel gas and oxidizing-agent gas become likely to leak inside the single cells, and thereby the cross-leakage (cross leak) phenomenon occurs, and consequently there are such problems as the electricity-generation voltage has dropped, and the like. That is, in the conventional flat-plate-structured fuel cell, it is difficult to improve the output density per unit volume more than currently.

As a method for solving these problems, the development of tube-type (solid-cylinder-type, hollow-cylinder-type or hollow-configured) fuel cell has been investigated. For example, in Japanese Unexamined Patent Publication (KOKAI) Gazette No. 7-263,001 (hereinafter, referred to as "Patent Literature No. 1"), Japanese Unexamined Patent Publication (KOKAI) Gazette No. 2006-4,742 (hereinafter, referred to as "Patent Literature No. 2") or Japanese Unexamined Patent Publication (KOKAI) Gazette No. 2005-353,489 (hereinafter, referred to as "Patent Literature No. 3"), tube-type fuel cells are disclosed. Inparticular, as disclosed in Patent Literature No. 1, it is feasible to enlarge the electricity-generation reaction area by adapting the electrolytic membrane into a tube shape with a small diameter. Moreover, from the configuration of tube-type fuel cell, the separators, which have been needed in flat-plate-type fuel cell, become unnecessary, and accordingly there is such a benefit that it is likely to be structurally simplified, and so on. Further, it is possible to bundle a plurality of single cells, connect the fuel electrodes (or oxidizing-agent electrodes) of the single cells in parallel and then accommodate them in a battery case. Note that the inside electricity collectors of a plurality of the single cells are connected in parallel by way of electrically connectable wires, and that the outside electricity collectors are connected by way of electrically connectable connectors.

Patent Literature No. 1: Japanese Unexamined Patent Publication (KOKAI) Gazette No. 7-263,001;
Patent Literature No. 2: Japanese Unexamined Patent Publication (KOKAI) Gazette No. 2006-4,742; and
Patent Literature No. 3: Japanese Unexamined Patent Publication (KOKAI) Gazette No. 2005-353,489

DISCLOSURE OF THE INVENTION

Assignment to be Solved by the Invention

In the case of connecting a plurality of single cells in parallel and then accommodating them after bundling them, although a method of collecting electricity in the axially-orthogonal directions of the single cells (radial directions in cylindrical shape) in the outside electricity collectors is feasible, connectors are necessary in order to connect the outside electricity collectors of the neighboring single cells. Accordingly, the electricity-collecting distance between the outside electricity collectors of the neighboring single cells is determined by the length of the connectors, and consequently there is such a problem that a voltage loss occurs because of the resistance of the connectors.

The present invention is one which has been done in view of the aforementioned circumstances, and it is an assignment to provide a tube-type fuel cell which has an electricity-collecting structure that makes it possible to collect electricity in axially-orthogonal directions in an outside electricity collector of single cell constituting the tube-type fuel cell, and whose electricity-collecting distance is so less as to make it possible to be of low resistance.

Means for Solving the Assignment

A tube-type fuel cell according to the present invention is characterized in that, in a tube-type fuel cell comprising: a tube-shaped single cell being completed by putting an inside electricity collector, a first catalytic electrode layer, an electrolytic membrane, a second catalytic electrode layer and an outside electricity collector in a lamination in this order from an axially-orthogonal inner side; and a battery case for bundling a plurality of the single cells together and then accommodating the single cells therein; a plurality of the single cells being accommodated together within the battery case while contacting with each other electrically by way of at least a part of outer peripheral surfaces of the outside electricity collectors of the single cells, thereby collecting electricity in axially-orthogonal directions thereof. Thus, when a plurality of the single cells are connected together, the outside electricity collector of one of the single cells contacts with the outside electricity collector of the other one of the neighboring single cells, and thereby at least a part of outer peripherals surfaces of the outside electricity collectors can function as a electrically connectable connectors. Accordingly, the electricity collection in axially-orthogonal directions becomes feasible in the outside electricity collectors, and further the electricity-collecting distance shortens the most because no connectors exist between the single cells. That is, it is not necessary to dispose any connectors between the single cells that are connected together, and consequently it is possible to make the resistance resulting from the connectors disappear. It is feasible for the current (voltage) that generates by means of electricity-generation reaction to undergo electricity collection in low resistance state. Therefore, since the voltage (current) loss, which results from tube-type fuel cells being connected together, can be reduced, it is advantageous for improving the efficiency of fuel cell. Moreover, since connectors are unnecessary, it is possible to cut down the production costs, and simultaneously therewith it is possible to simplify the production processes.

Moreover, the out side electricity collectors of the tube-type fuel cell according to the present invention can preferably be constituted of an elastically deformable member. By means of constituting the outside electricity collectors of an elastically (nonplastically) deformable member, the single cells can maintain predetermined strength with respect to the inside electrolytic layers and catalytic layers, and additionally can change the cross-sectional configuration to a certain extent. That is, when bundling a plurality of the single cells together and then accommodating them in the battery case, the outside electricity collectors of the neighboring single cells receive external force, which results from the restriction by means of the battery case, to undergo elastic deformation, thereby enlarging areas between the single cells over which they contact by way of the outside electricity collectors. Consequently, a current, which has been collected by the outside electricity collectors of the neighboring single cells, is conducted in low resistance state, and thereby it is possible to suppress energy losses that occur by means of the electricity-collecting distances, contacting areas, and the like.

Moreover, it is preferable that the tube-type fuel cell according to the present invention can be provided with an electrode, which contacts electrically with the outside electricity collector of at least one of the single cells among a plurality of the single cells being accommodated within the battery case, and which conducts electricity to the outside. Thus, it is possible to conduct a current, which has undergone electricity collection at the outside electricity collector to the outside by way of the electrode. Note that, when the battery case, which accommodates the single cells therein, is constituted of an electrically connectable member, if an inner peripheral surface of that battery case contacts with the outside electricity collector of one of the single cells, it is possible as well to conduct a current, which has undergone electricity collection, to the outside by way of the battery case. In this case, it is not necessary at all to dispose the electrode especially.

In addition, it is preferable that the tube-type fuel cell according to the present invention can comprise a sealer for sealing the entry of gas into spaces between a plurality of the single cells that are connected together. In general, since the cross-sectional configuration of the single cells is a circular shape, empty spaces are formed between the single cells simultaneously when bundling a plurality of the single cells and then accommodating them within the battery case. Accordingly, a part of fuel gas (or oxidizing-agent gas) is flowed to the empty spaces, and thereby the flow rate of fuel gas (or oxidizing-agent gas) that flows inside the outside electricity collectors declines, and thereby the concentrations of reactants also decline. On the contrary, by means of disposing the sealer for making the empty spaces disappear, the fuel gas (or oxidizing-agent gas) does not enter spaces other than the single cells within the battery case, and thereby the flow rate of fuel gas (or oxidizing-agent gas) that flows through the outside electricity collectors rises, and thereby it is possible to maintain the concentrations of reactants at high level. Consequently, the electricity-generation reaction is facilitated, thereby being advantageous for the electricity-generation efficiency of fuel cell.

Effect of the Invention

In accordance with the tube-type fuel cell according to the present invention, the outside electricity collector of one of the single cells comes in contact with the outside electricity collectors of the neighboring single cells when a plurality of the single cells are connected together, and thereby at least a part of the outer peripheral surfaces of the outside electricity collectors can function as electrically connectable connectors. Accordingly, the electricity collection becomes feasible in the axially-orthogonal directions in the outside electricity collectors, and further the electricity-collecting distance shortens the most because no connectors exist between the single cells. That is, it is not necessary to dispose connectors between the single cells that are connected together, and thereby it is possible to make the resistance that results from the connectors disappear. It is possible to let the current (voltage) being generated by means of the electricity-generation reaction undergo electricity collection in low resistance state. Therefore, since the voltage (current) loss that results from tube-type fuel cells being connected together is reduced, it is advantageous for improving the efficiency of fuel cell. Moreover, since connectors are unnecessary, the production costs can be reduced, and simultaneously therewith the production processes can be simplified.

BRIEF DESCRIPTION OF THE DRAWINGS

Fig. 1 is a conceptual diagram of a tube-type fuel cell according to a present embodiment;
Fig. 2 is a transverse cross-sectional diagram and layout diagram of single cells that constitute the tube-type fuel cell according to the present embodiment;
Fig. 3 is a front view of the single cell that constitutes the tube-type fuel cell according to the present embodiment;
Fig. 4 illustrates a layout relationship between the single cells that constitute the tube-type fuel cell according to the present embodiment;
Fig. 5 illustrates the flow directions of fuel gas and oxidizing-agent gas within the single cells of the tube-type fuel cell according to the present embodiment;
Fig. 6 illustrates the flow rates of gases that flow through the outside electricity collectors in such a state that sealers are not provided between the single cells of the tube-type fuel cell according to the present embodiment;
Fig. 7 is a layout diagram of the single cells when sealers are provided between the single cells of the tube-type fuel cell according to the present embodiment;
Fig. 8 illustrates a transverse cross-sectional diagram of the sealer for the tube-type fuel cell according to the present embodiment; and

Fig. 9 illustrates the flow rates of gases that flow through the outside electricity collectors in such a state that sealers are provided between the single cells of the tube-type fuel cell according to the present embodiment.

Explanation on Reference Numerals

1: Single Cell;
2: Battery Case;
11: Inside Electricity Collector;
12: First Catalytic Electrode Layer;
13: Electrolytic Layer;
14: Second Catalytic Electrode Layer;
15: Outside Electricity Collector; and
151: Outer Peripheral Surface

Best Mode for Carrying Out the Invention

Hereinafter, while referring to the drawings, an embodiment according to the present invention will be explained.

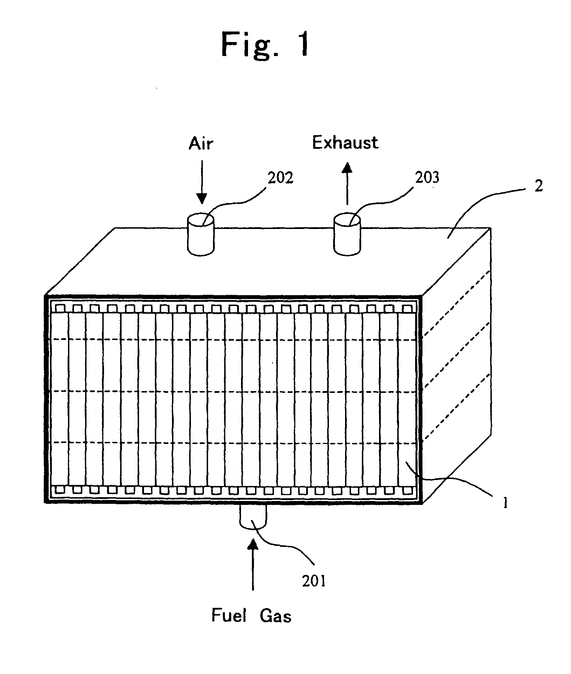

An outline construction of a tube-type fuel cell according to a present embodiment is shown in Fig. 1. As illustrated in Fig. 1, the tube-type fuel cell according to the present embodiment is completed by connecting a plurality of single cells 1 in parallel, and bundling them and then accommodating them in a battery case 2. The battery case 2 is equipped with a fuel-gas feeding-in port 201 for feeding a fuel gas in, an oxidizing-agent port 202 for feeding an oxidizing-agent gas (air) in, and an exhaust port 203.

The single cells 1, which constitute the tube-type fuel cell according to the present embodiment, are connected in parallel, and convey an electric current to the outside by way of a later-described electric conductor. Moreover, the single cells 1 of the tube-type fuel cell according to the present embodiment are formed as a tube shape, and their transverse cross section is circular. Note that it is possible to turn the transverse cross-sectional configuration of the tube-type single cells 1 into configurations other than a circle, such as eclipses or squares, for instance.

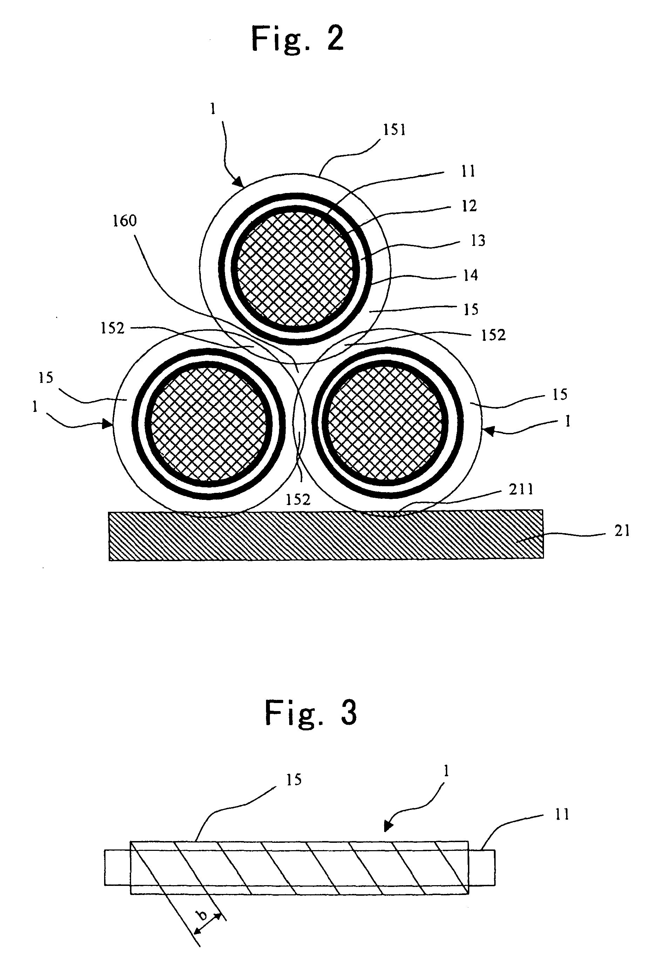

Next, the construction of the single cells 1, or a layout will be explained, layout when a plurality of the single cells 1 are bundled parallelly and are then accommodated in the battery case 2. Fig. 2 illustrates the transverse cross section of the single cells 1, and the positional relationship between a plurality of the single cells 1.

As shown in Fig. 2, the single cells 1 of the tube-type fuel cell according to the present embodiment is constituted of an inside electricity collector 11, a first catalytic electrode layer 12, an electrolytic layer 13, a second catalytic electrode layer 14, and an outside electricity collector 15. The inside electricity collector 11 is constituted of a columnar supporting member, and continuous pores are formed inside so that gases can pass through. Moreover, the columnar supporting member constituting the inside electricity collector 11 is equipped with electric connectivity, and can thereby convey electricity to the outside. Note that a membrane electrode assembly (MEA) is constituted of the first catalytic electrode layer 12, the electrolytic layer 13, and the second catalytic electrode layer 14.

In the single cells 1, the first catalytic electrode layer 12 is disposed on an outer peripheral surface of the inside electricity collector 11 so as to cover the inside electricity collector 11. Next, the electrolytic layer 13 is disposed on an outer peripheral surface of the first catalytic electrode layer 12 so as to cover the first catalytic electrode layer 12. Moreover, the second catalytic electrode layer 14 is disposed on an outer peripheral surface of the electrolytic layer 13 so as to cover the electrolytic layer 13. Furthermore, the outside electricity collector 15 is disposed on an outer peripheral surface of the second catalytic electrode layer 14. Note that, in the tube-type fuel cell according to the present embodiment, although the first catalytic electrode layer 12 is an oxidizing-agent electrode (air electrode) and the second catalytic electrode layer 14 is a fuel electrode, it is possible to put the first catalytic electrode layer 12 in position as a fuel electrode, and to put the second catalytic electrode layer 14 in position as an oxidizing-agent electrode (air electrode). In such a fuel cell, it is possible to let it function as a battery by connecting the inside electricity collector 11 and outside electricity collector 15 to an external circuit electrically and then operating it while supplying raw materials to the fuel electrode and air electrode respectively.

Moreover, since the inside electricity collector 11 is constituted of an electrically connectable member that possesses continuous pores, air is transferred by way of the inside electricity collector 11 that is positioned at the central portion of the single cells 1, and is then provided to the first catalytic electrode layer 12 (air electrode).

Moreover, in the present embodiment, as for the inside electricity collector 11, although it is not limited in particular as far as it is a material being of highly electrical conductivity for passing electrons therethrough at the time of electricity generation in the membrane electrode assembly, it can preferably be an electrically conductive porous material, such as powdery sintered bodies, fibrous sintered bodies and fibrous foamed bodies, as raw-material supply passages for raw-material gases, and the like, so that raw materials are likely to diffuse therein. As for the highly electrical conductive material, it is possible to name the following, for instance: porous bodies being made of materials that exhibit electric conductivity, such as metals like gold, platinum, and so forth, carbon, and those in which the surface of titanium or carbon is coated with metals like gold, platinum, and so on; or it is possible to name those which are cylinder-shaped hollow bodies being made of them and whose wall surface is provided with holes by means of punching, and the like; and it is preferable to be a porous carbon material from the viewpoints of electric conductivity, raw-material diffusibility, corrosion resistance, and so forth. When the inside electricity collector 11 is a hollow body, a membrane thickness can fall in a range of 0.5 mm-10 mm, preferably 1 mm-3 mm, for instance. When the inside electricity collector 11 is a solid body, a membrane thickness can fall in a range of 0.5 mm-10 mm, preferably 1 mm-3 mm, for instance.

Note that a pore diameter of the pores that are provided by means of punching, and the like, in a wall surface of the inside electricity collector 11 can usually fall in a range of 0.01 mm-1 mm.

In the present embodiment, although the inside electricity collector 11 is employed as a cylindrical supporting body, it is not limited to this: for example, instead of the inside electricity collector 11, it is possible to use a supporting body that is formed as a cylindrical shape, or the like, which is made of a rod, a wire, or the like, that is made from resin being of good mold releasability, such as Teflon (trademark). In this case, it is possible to remove a membrane electrode assembly (MEA) from the supporting body after forming the membrane electrode assembly. Note that, as for the cylindrical supporting body, it is allowable to be a cylindrical shape: although it is allowable to be any configurations such as cylindrical shapes, polygonal cylindrical shapes like triangular cylinders, quadrangular cylinders, pentagonal cylinders, hexagonal cylinders, and so on, and elliptic cylinders, for instance; it can usually be a cylindrical shape. Moreover, in the present description, the "cylindrical shape" includes hollow bodies and solid bodies unless being explained especially.

As for the first catalytic electrode layer 12 (air electrode), it can be those in which a catalyst, such as carbon with platinum (Pt) or the like being loaded thereon, is dispersed in a resin, such as a solid polymer electrolyte like Nafion (trademark), and is then formed as a film, for instance. A membrane thickness of the first catalytic electrode layer 12 can fall in a range of 1 $\mu$m-100 $\mu$m, preferably 1 $\mu$m-20 $\mu$m, for instance.

As for the electrolytic layer 13, it is not limited in particular as far as it is a material being of high ionic conductivity toproton ($H^+$) and oxygen ion ($O^{2-}$): for example, although it is possible to name solid polymer electrolytic membranes, stabilized zirconia membranes, and the like, a solid polymer electrolytic membrane, such as a perfluorosulfonic acid system, can be used preferably. Specifically, it is possible to employ a perfluorosulfonic acid-system solid polymer electrolytic membrane, such as Goreselect (trademark) of JAPAN GORETEX Co., Ltd., Nafion (trademark) of Du Pont Corporation, Aciplex (trademark) of ASAHIKASEI Co., Ltd., or Flemion (trademark) of ASAHI GLASS Co., Ltd. A membrane thickness of the electrolytic membrane 13 can fall in a range of 10 $\mu$m-200 $\mu$m, preferably 30 $\mu$m-50 $\mu$m, for instance.

As for the second catalytic electrode layer 14 (fuel electrode), it can be those in which a catalyst, such as carbon with platinum (Pt) or the like being loaded thereon along with another metal like ruthenium (Ru), is dispersed in a resin, such as a solid polymer electrolyte like Nafion (trademark), and is then formed as a film. A membrane thickness of the second catalytic electrode layer 14 can fall in a range of 1 $\mu$m-100 $\mu$m, preferably 1 $\mu$m-20 $\mu$m, for instance.

The outside electricity collector 15 is constituted of a member which exhibits through-hole property and electric connectivity, and additionally which is capable of deforming elastically. As illustrated in Fig. 2, when bundling a plurality of the neighboring single cells 1 and then accommodating them in the battery case 2 (shown in Fig. 1), the outside electricity collectors 15 of the single cells 1 contact the outer peripheral surfaces 151 of the neighboring single cells 1 (the outer peripheral surfaces of the outside electricity collectors 15) by means of the regulatory force of the battery case 2, and thereby outside-electricity-collectors contacting portions 152 are formed. The areas of the contacting surfaces enlarge by elastic deformation by means of constituting the outside electricity collectors 15 of an elastically deformable member. Accordingly, it is possible to enlarge the contacting areas between the outside-electricity-collectors contacting portions 152 of the neighboring single cells 1, and consequently it is advantageous for the electricity collection in the outside electricity collectors 15 and the flow of gases inside them. Moreover, since the neighboring single cells 1 contact electrically one another by way of the outside electricity collectors 15, the outside electricity collectors 15 of all of the single cells 1, which are accommodated in the battery case 2, become integral electrically. Furthermore, an electrode 21 is disposed, electrode 21 which contacts the outside electricity collector 15 of at least one of the single cells 1 among a plurality of the single cells 1. Accordingly, it is possible to electrically collect currents, which have been collected with the outside electricity collectors 15, in the radial directions of the single cells 1, and additionally it is possible to convey a current to the external circuit. Note that, when the battery case 2 is constituted of an electrically conductive member, it becomes possible to convey a current, which has been collected with the outside electricity collectors 15 of the single cells 1, to the outside by way of the battery case 2, if the single cells 1 contact an inner wall of the battery case 2, and thereby the need for disposing the electrode 21 especially disappears.

In an example of the present embodiment, the outside electricity collectors 15 are constituted of a strip-shaped member (product name: Cellmet, SUMITOMO ELECTRIC) whose material quality is SUS (stainless steel). Note that the outside electricity collectors 15 are not limited to this, but it is possible to constitute them using a member that is good in terms of through-hole property and electric connectivity, and that is capable of deforming elastically. Moreover, the outside electricity collector 15 is formed by winding a strip-shaped member, whose material quality is SUS, around the second catalytic electrode layer 14 with a predetermined oblique angle on the outer peripheral surface of the second catalytic electrode layer 14, which is positioned at the radially outermost surface of the first catalytic electrode layer 12, electrolytic layer 13 and second catalytic electric layer 14 that are laminated by means of coating on the inside electricity collector 11. Fig. 3 illustrates such a state that a strip-shaped member, which constitutes the outside electricity collector 15, is wound around the outer periphery of the single cell 1.

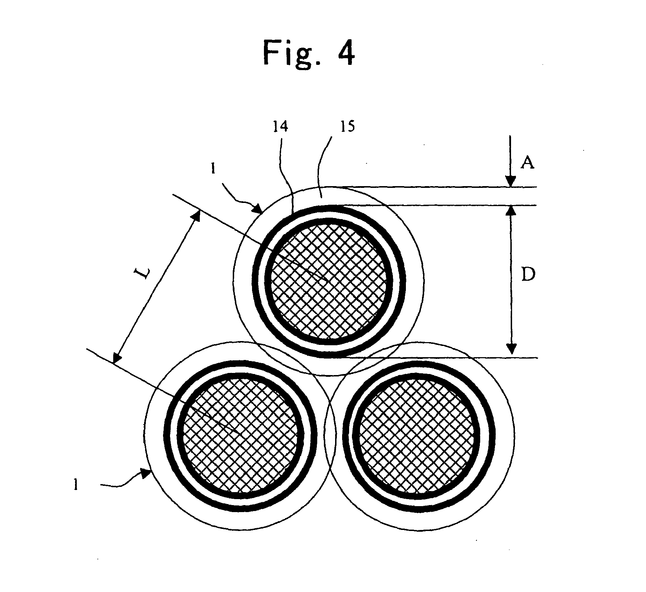

Moreover, Fig. 4 illustrates a layout relationship between the single cells 1. As shown in Fig. 4, when the central distance between the neighboring two single cells 1 is designated L, and the thickness of the outside electricity collectors 15 of the single cells 15 is designated A, and the outside diameter of the second catalytic electrode layers 14 is designated D; if they satisfy the relationship of Equation (1); it is possible to take out currents that have been collected with the outside electricity collectors 15 of the neighboring single cells 1, and it is possible to complete wire connections by simply contacting one of the outside electricity collectors 15 with the electrode 21 (Fig. 2).

$$\texttt{Equation (1):}$$

$$\texttt{(L - D)/2 < A}$$

Note that, in an example of the present embodiment, the width b of this strip-shaped member was 5 mm, the thickness A was 1 mm, and the porosity was 90%. Moreover, the length of the single cell was 100mm, and the outside diameter D of the second catalytic electrode layer 14 that constituted the single cell 1 was 3 mm. Further, the central distance L between the two neighboring single cells 1 was 4.5 mm. At this time, since the left side of Equation (1) becomes (4.5 - 3)/2 = 0.75 and the right side becomes 1, the relationship of Equation (1) is satisfied. That is, 0.5-mmcollapsed (or elastic) deformation was taking place in the outside-electricity-collectors contacting portions 152 (Fig. 2) of the outside electricity collectors 15 of the neighboring single cells 1. Note that the radial deformation magnitude of the outside electricity collector of one of the single cells 1 was 0.25 mm.

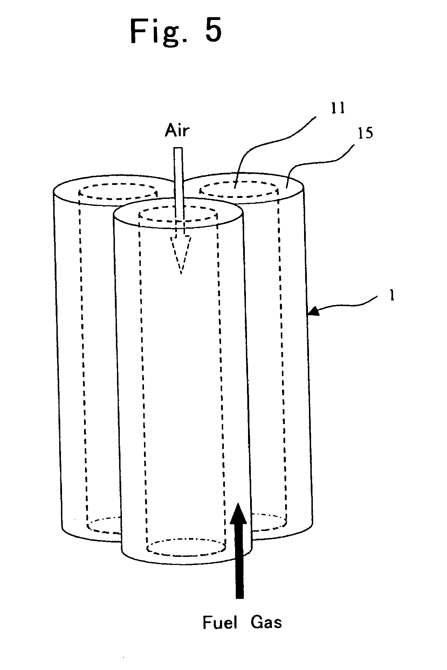

Fig. 5 is one that illustrates the flowing directions of the fuel gas and oxidizing-agent gas within the single cells 1. As shown in Fig. 5, when flowing the oxidizing-agent gas and fuel gas to the opposite sides of the electrolytic layers 13 of the single cells 1 of the tube-type fuel cell according to the present embodiment to carry out the electricity-generation reaction, the oxidizing-agent gas (air) flows in the axial directions inside the inside electricity collectors 11 that are positioned at the central portions, and the fuel gas flows in the axial directions inside the outside electricity collectors 15 that are positioned on the outer sides of the single cells 15. Moreover, as shown in Fig. 2, an empty space 160, which is surrounded by a plurality of the single cells 1 possessing a circular cross section, is formed within the battery case 2.

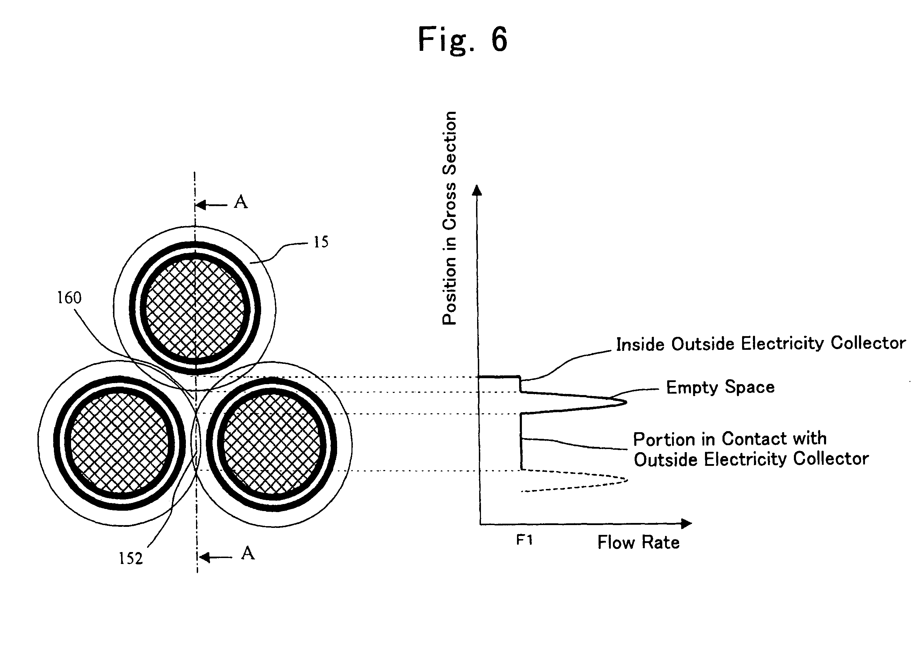

Fig. 6 is one that illustrates the flow rates of the fuel gas that flows through the single cells 1 being accommodated in the battery case 2. As can be seen from Fig. 6, since the gas resistance within the empty space 160 is less, a part of the fuel gas flows by way of this empty space 160. Accordingly, the flow rates of the fuel gas differ depending on places in the A-A cross section in which they flow, and consequently the gaseous flow rate F1 in the outside electricity collectors 15 declines more than the gaseous flow rate in the empty space 160.

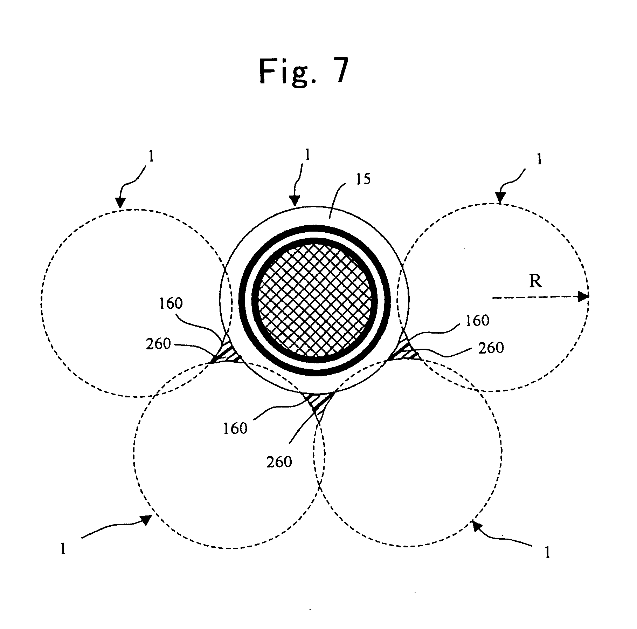

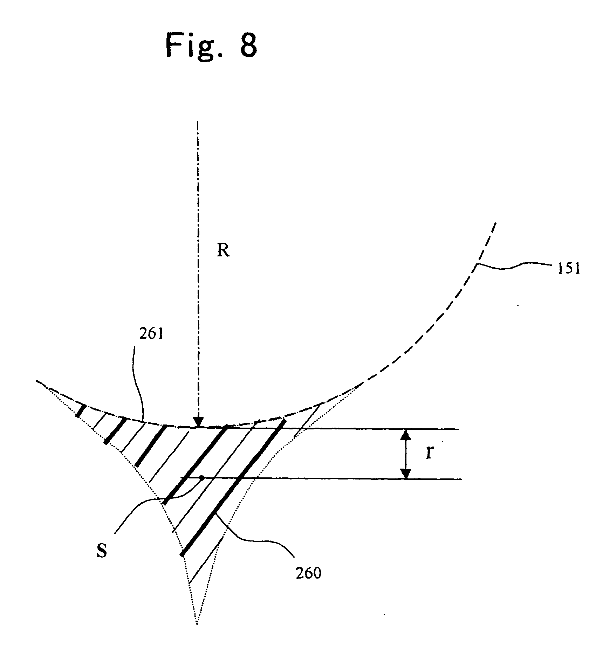

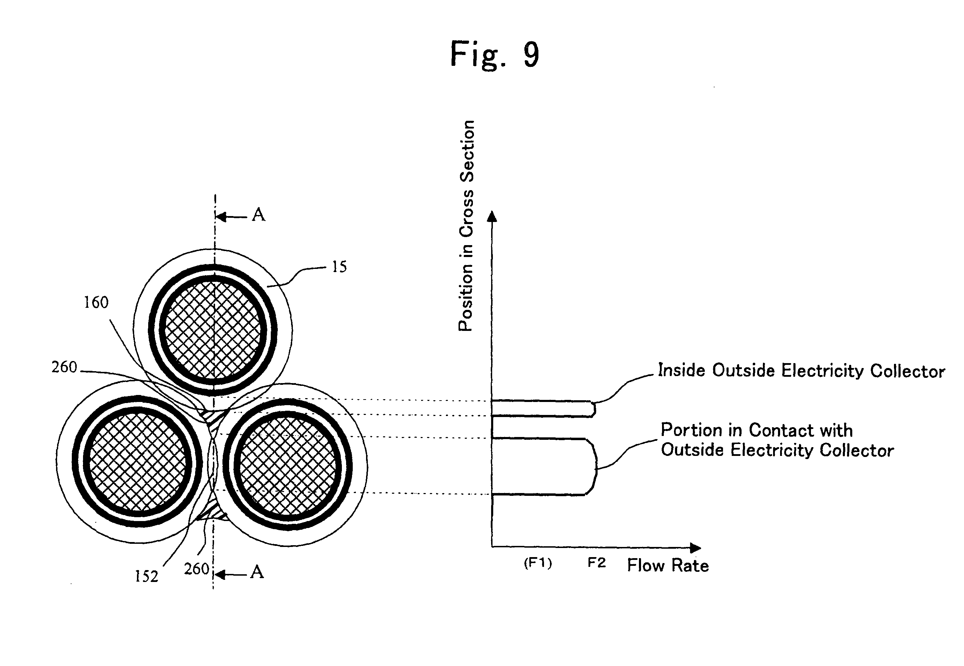

In order to enlarge the flow rate of the fuel gas that flows inside the outside electricity collectors 15, sealers 260 for sealing gases that flow through the empty spaces 160 are disposed in the present embodiment. A cross section when a plurality of the single cells 1 are bundled and then put in place is illustrated in Fig. 7, and is one that illustrates such a state that the sealers 260 are set in place within the empty spaces 160. Thus, the empty spaces 160 within the battery case 2 disappear, the flow rate F2 of the fuel gas that flows inside the outside electricity collectors 15 of the single cells 1 becomes larger, and the fuel gas that flows through the empty spaces 160 disappears. Fig. 8 is one that illustrates the flow rates of the fuel gas in the A-A cross section of one of the single cells 15 when the sealer 260 is disposed within the empty space 160. As can be seen from Fig. 8, the empty space 160 is sealed by the sealer 260, the fuel gas comes to pass through the inside of the outside electricity collector 15 completely, and the flow rate F2 of the fuel gas is improved greatly compared with the flow rate F1 in the case where the sealer 260 is not disposed. Note that, as shown in Fig. 9, the sealers 260 are constituted of a triangle-pole-shaped component part that is equipped with outer-peripheral end surfaces 261 so that they run along the outer peripheral surfaces 151 of the outside electricity collectors 15 of the single cells 1. Therefore, it is possible to make them contact in such a state that the outer-peripheral end surfaces 261 adhere to the outer peripheral surfaces 151 of the outside electricity collectors 15 closely. Accordingly, the empty spaces 160 disappear completely, and then the fuel gas that flows through the empty spaces 160 is sealed. Hence, the flow rate of the fuel gas within the outside electricity collectors 15 rises, and thereby it is possible to maintain the concentrations of the electricity-generation reactants at high level. Consequently, the electricity-generation reaction is facilitated, and thereby it is advantageous for the electricity-generation efficiency of fuel cell.

Note that, in the present embodiment, resin or the like was injected into the empty spaces 160 to form the sealers 260. Moreover, when the outside diameter (2 X R) of the single cells 1 was 5 mm, the shortest distance r from the outer-peripheral end surfaces 261 of the triangle-pole-shaped member, which constituted the sealers 260, to the center S was 0.775 mm (in the radial direction R of the single cells 1).

In the tube-type fuel cell according to the present embodiment, it is possible to let it function as a battery by connecting the inside electricity collectors 11 and outside electricity collectors 15 to an external circuit electrically and then operating it while supplying raw materials to the first catalytic electrode layers 12 and second catalytic electrode layers 14 respectively.

As for a raw material to be provided to the side of the first catalytic electrode layers 12, it is possible to name an oxidizing-agent gas, or the like, such as oxygen and air. As for a raw material to be provided to the side of the second catalytic electrode layers 14, it is possible to name a reducing gas (fuel gas), such as hydrogen and methane, or a liquid fuel, such as methanol, or the like.

Moreover, in the tube-type fuel cell according to the present embodiment, when operating it while a hydrogen gas is used as the raw material to be supplied to the second catalytic electrode layers 14 and air is used as the raw material to be supplied to the first catalytic electrode layers 12, hydrogen ions ($H^+$) and electrons ($e^-$) arise from the hydrogen gas ($H_2$) at the second catalytic electrode layers 14 via the reaction formula of Equation (2).

$$\text{Equation (2):}$$
$$H_2 \rightarrow 2H^+ + 2e^-$$

The electrons ($e^-$) pass through the external circuit from the outside electricity collectors 15, and arrive at the first catalytic electrode layers 12 from the inside electricity collectors 11, which are disposed on the inner peripheral surfaces of the first catalytic electrode layers 12, if need arises. Water ($H_2O$) generates at the first catalytic electrode layers 12 by means of oxygen ($O_2$) in the air being supplied, the hydrogen ions ($H^+$), which have passed through the electrolytic layers 13, and the electrons ($e^-$), which have arrived at the first catalytic electrode layers 12 through the external circuit, via the reaction formula of Equation (3).

$$\text{Equation (3):}$$
$$2H^+ + 1/2O_2 + 2e^- \rightarrow H_2O$$

Thus, at the first catalytic electrode layers 12 and second catalytic electrode layers 14, the chemical reactions take place, and then electric charges arise, and thereby it is possible to function as a battery. And, since the discharged component is water in a series of the reactions, a clean battery comes to be constituted.

INDUSTRIAL APPLICABILITY

The tube-type fuel cell according to the present invention can be employed in industries, for example, in the fields of automobile industries, and the like, and further can be employed also as an energy source for household applications, and so forth.

**Claims**

1. A tube-type fuel cell comprising: a tube-shaped single cell being completed by putting an inside electricity collector, a first catalytic electrode layer, an electrolytic membrane, a second catalytic electrode layer and an outside electricity collector in a lamination in this order from an axially-orthogonal inner side; and a battery case for bundling a plurality of said single cells together and then accommodating the single cells therein;
the tube-type fuel cell being **characterized in that** a plurality of said single cells being accommodated together within said battery case while contacting with each other electrically by way of at least a part of outer peripheral surfaces of said outside electricity collectors of the single cells, thereby collecting electricity in axially-orthogonal directions thereof.

2. The tube-type fuel cell according to claim 1, wherein said outside electricity collectors are constituted of an elastically deformable member.

3. The tube-type fuel cell according to claim 1 being provided with an electrode, which contacts electrically with said outside electricity collector of at least one of said single cells among a plurality of said single cells being accommodated within said battery case, and which conducts electricity to the outside.

4. The tube-type fuel cell according to claim 1 comprising a sealer for sealing the entry of gas into spaces between a plurality of said single cells that are put into place together.

# Fig. 1

Air          Exhaust

202          203          2

Fuel Gas

1

201

# Fig. 2

# Fig. 3

# Fig. 4

# Fig. 5

Air

11

15

1

Fuel Gas

Fig. 6

# Fig. 7

# Fig. 8

# Fig. 9

EP 2 037 520 A1

## INTERNATIONAL SEARCH REPORT

| | International application No. |
|---|---|
| | PCT/JP2007/062289 |

### A. CLASSIFICATION OF SUBJECT MATTER

*H01M8/02(2006.01)i, H01M8/10(2006.01)i, H01M8/24(2006.01)i*

According to International Patent Classification (IPC) or to both national classification and IPC

### B. FIELDS SEARCHED

Minimum documentation searched (classification system followed by classification symbols)
H01M8/02, H01M8/10, H01M8/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 62-252077 A (Westinghouse Electric Corp.),<br>02 November, 1987 (02.11.87),<br>Full text<br>& US 4812373 A1 & EP 242200 A1 | 1-4<br>1-4 |
| Y | JP 2006-4742 A (Toyota Motor Corp.),<br>05 January, 2006 (05.01.06),<br>Full text<br>(Family: none) | 1-4 |
| Y | JP 2003-272668 A (Kyocera Corp.),<br>26 September, 2003 (26.09.03),<br>Full text<br>(Family: none) | 1-4 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September, 2007 (27.09.07) | 09 October, 2007 (09.10.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/062289

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-166470 A  (Toho Gasu Kabushiki Kaisha),<br>23 June, 2005 (23.06.05),<br>Full text<br>(Family: none) | 1-4 |
| A | JP 2005-174846 A  (Nissan Motor Co., Ltd.),<br>30 June, 2005 (30.06.05),<br>Full text<br>(Family: none) | 1-4 |
| A | JP 2005-166552 A  (Canon Inc.),<br>23 June, 2005 (23.06.05),<br>Full text<br>(Family: none) | 1-4 |
| P,A | JP 2006-216416 A  (Toyota Motor Corp.),<br>17 August, 2006 (17.08.06),<br>Full text<br>(Family: none) | 1-4 |
| P,A | JP 2006-216464 A  (Toyota Motor Corp.),<br>17 August, 2006 (17.08.06),<br>Full text<br>(Family: none) | 1-4 |

Form PCT/ISA/210 (continuation of second sheet) (April 2005)

**EP 2 037 520 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7263001 A
- JP 2006004742 A
- JP 2005353489 A